# EUROPEAN PATENT SPECIFICATION

(11) **EP 1 971 540 B1**
(45) Date of publication and mention of the grant of the patent: **11.11.2009**
(21) Application number: 06843924.9
(22) Date of filing: 22.12.2006
(51) Int. Cl.: B65G 47/248

(54) **DEVICE AND METHOD FOR TRANSFERRING GREEN BRICKS**
VORRICHTUNG UND VERFAHREN ZUR ÜBERTRAGUNG VON GRÜNLINGEN
DISPOSITIF ET PROCEDE POUR LE TRANSFERT DE BRIQUES CRUES

(30) Priority: 23.12.2005 NL 1030756
(43) Date of publication of application: 24.09.2008
(73) Proprietor: Beheermaatschappij De Boer Nijmegen B.V., 6541 BS Nijmegen (NL)
(72) Inventor: KOSMAN, Wilhelmus, Jacobus, Maria, NL-6562 DA Groesbeek (NL)
(74) Representative: Land, Addick Adrianus Gosling
(86) International application number: PCT/NL2006/000666
(87) International publication number: WO 2007/073182

(56) References cited:
- DE-B- 1 047 713
- DE-U1- 20 219 892
- FR-A- 2 131 700
- US-A- 3 779 410
- US-B1- 6 398 008

## Description

The present invention relates to a device and method for transferring green bricks, in particular dried bricks, from a first transport system to a second transport system. The invention also relates to a system and to a method for transferring a number of green bricks.

In the brick manufacturing industry bricks are manufactured on a large scale, from for instance clay, by arranging the clay in mould containers provided with desired moulds, by causing the clay to be released from the mould containers onto a drying plate and by transporting the released green bricks together with the drying plate to a drying kiln using a drying plate conveyor.

Brick moulding machines for manufacturing bricks in such a manner are generally known. An example of such a machine is described in the document EP 1 000 000 B1 of applicant. The machine is intended for the manufacture of bricks. Once the bricks have been dried in a drying kiln, the drying plate conveyor discharges the dried bricks disposed on the drying plates. At a given moment the bricks are slid laterally from the drying plates by hand or mechanically and come to lie on a discharge chain or belt of another transport system, whereafter further processing of the bricks follows. During the transfer of the bricks from the drying plates to the other transport system a relatively large amount of noise is produced since the full weight of the bricks is displaced over the drying plate. Particularly when the drying plates are manufactured from perforated plate material this can result in considerable nuisance for the surrounding area. A large amount of dust and sand is moreover released during sliding of the dried bricks, which is also harmful for the environment and can moreover affect the operation of the machines. Finally, there is a chance of the bricks that have just been dried being damaged as a result of sliding thereof. This means that all bricks must be checked for quality after the sliding, and this is a time-consuming process.

It is an object of the present invention to provide a device, system and method for transferring a number of green bricks of clay disposed on a feed plate from a first transport system to a second transport system, wherein the above stated drawbacks are obviated.

According to a first aspect of the present invention, there is provided for this purpose a device for transferring a number of green bricks of clay disposed on a feed plate from a first transport system to a second transport system, which device comprises a frame which is provided with:
- a first transport unit for supplying a feed plate coming from the first transport system and on which a number of green bricks are disposed;
- a second transport unit for discharging green bricks to the second transport system;
- at least one revolving unit coupled to the first and second transport unit for revolving the first and second transport unit with the feed plate with green bricks arranged therebetween between a starting position, in which the second transport unit is situated above the first transport unit, and an end position in which the first transport unit is situated above the second transport unit;
- pressing means for pressing the feed plate with green bricks fixedly between the first and second transport unit during the revolving;
- discharge means for discharging one or more feed plates revolved onto the top of the green bricks.

A device is per se known from the German document DE 202 19 892 U1 for turning over plate-like building components. The device consists of two endless belt conveyors disposed parallel to each other. Both conveyors can be revolved together through 180 degrees in order to feed the structural parts situated on the first conveyor, to then fixedly clamp the structural parts between the two conveyors, and to finally discharge the plate-like structural parts which have come to lie on the second conveyor. However, the known device has for its object to provide the option of printing or otherwise processing the structural parts on both sides, and is unsuitable for transferring green bricks disposed on a feed plate of a first transport system to a second transport system.

The first transport system can for instance be any random conveyor with which drying plates, i.e. plates on which the green bricks are laid to dry, are transported. Other conveyors are however equally possible. No green bricks, one green brick or a plurality of green bricks can be disposed on the supplied feed plate. Instead of sliding the green bricks off the feed plate, the whole of green bricks and feed plate is revolved so that at a given moment the feed plate comes to lie on top of the green bricks. This makes it possible to remove the feed plate in simple manner, for instance by lifting and discharging it, without a great deal of noise and/or dust being produced. By furthermore lifting the feed plate carefully from the green bricks the chance of damage to the green bricks is minimal.

According to a first preferred embodiment, the pressing means are adapted to press the green bricks fixedly between the feed plate, which is arranged on the first transport unit, and the second transport unit. The green bricks are pressed fixedly so as to protect them during revolving and to ensure that the green bricks remain in place during revolving.

According to a further preferred embodiment, the device comprises side guides for lateral guiding of the green bricks and/or feed plate so that the green bricks and/or feed plate cannot slide out before, during or after the revolving. The side guide also makes it possible that a feed plate without bricks can likewise be revolved.

According to a determined preferred embodiment, a revolving unit comprises:
- a substantially annular revolving element on which the first and second transport units are mounted;
- at least two guide elements provided on the frame, in particular guide rollers, on which the revolving element supports;
- rotating means for rotating the revolving element and the transport units mounted thereon between the starting position and end position.

Both transport units are mounted on one or more revolving elements which rest on said guide elements. By rotating the at least one revolving element, and thereby rotating both transport units, the transport units can be made to switch position in simple manner. The rotating means are herein preferably embodied for the purpose of rotating the revolving element in a first direction from a starting position to an end position, and for rotating the revolving element in a second, opposite direction from the end position to the starting position. The advantage hereof is that the energy supply (current) and the air supply for causing the belts to operate can be provided in relatively simple manner. It is hereby also easily possible to create fixed start and end stops.

In a further preferred embodiment the rotating means comprise one or more drive elements, in particular drive belts, conveyors or chains, which engage round a revolving element and with which the revolving element can be rotated in structurally simple manner.

According to a further preferred embodiment, the pressing means comprise:
- guide means along which the first transport unit and/or the second transport unit can be displaced upward and downward in order to increase and/or decrease the distance between the two transport units;
- displacing means with which the intermediate distance can be decreased for the purpose of fixedly clamping the green bricks and can be increased for the purpose of releasing the green bricks.

The first and/or second transport unit can be displaced between two positions so as to ensure that the intermediate distance between the two transport units can be increased or decreased as desired. In order to press the green bricks in place the intermediate distance is decreased, while the intermediate distance is increased in order to release the green bricks once again. In the most preferred embodiment only the second transport unit is embodied for upward and downward displacement so as to simplify the construction of the device.

Once the green bricks and the feed plate have been turned over, pick-up means ensure that the feed plate revolved into a position on top of the green bricks is picked up and discharged. Before, during or after pick-up of the feed plate the green bricks are guided to a further, third transport unit of the second transport system, which transport unit provides for further transport of the green bricks.

In a particularly advantageous embodiment a transport unit, i.e. the first transport unit, the second transport unit and/or the third transport unit, comprises a circulating endless conveyor belt driven by one or more drive motors. Such an endless conveyor belt enables safe and secure transport of the green bricks. Other forms of transport are otherwise also possible, such as transport on a roller conveyor or the like.

According to a further embodiment, a device is provided, comprising:
- a first transfer unit comprising a first and second transport unit and a revolving unit;
- a second transfer unit comprising a first and second transport unit and a revolving unit;
- a collective drive motor for collective driving of the revolving units of the different first and second transfer units.

The collective drive motor can therefore simultaneously revolve the transport units associated with two or more devices so that a high processing capacity of the system can be ensured with a single drive motor.

According to another aspect of the invention, there is provided a system for transferring a number of green bricks, in particular dried bricks, disposed on a feed plate, the system comprising:
- a first transport system for supplying feed plates with green bricks;
- a device according to any of the foregoing claims, with which the feed plates can be discharged,
- a second transport system for discharging green bricks.

According to a further aspect of the present invention, a method is provided for transferring a number of green bricks of clay, in particular dried bricks, disposed on a feed plate from a first transport system to a second transport system, the method comprising of:
- supplying on a first transport unit a feed plate which comes from the first transport system and on which a number of green bricks is disposed,
- clamping the green bricks fixedly on the feed plate between the first transport unit and a second transport unit;
- revolving the first and second transport unit with the feed plate with green bricks arranged therebetween between a starting position, in which the second transport unit is situated above the first transport unit, and an end position in which the first transport unit is situated above the second transport unit;
- removing the feed plate resting on the green bricks after revolving the transport units;
- discharging the green bricks to the second transport system using the second transport unit.

The method also comprises of removing the feed plate resting on the green bricks after revolving the transport units. The removal can for instance take place by lifting the feed plate mechanically and then discharging it laterally. The feed plate is preferably carried back into said first transport system of the brick moulding machine and fed back to this machine for a renewed manufacturing cycle of receiving green bricks and allowing them to dry.

The method preferably also comprises of feeding a first batch of green bricks with the first transport unit, revolving the green bricks from the starting position to the end position and discharging the green bricks with the second conveyor, feeding a subsequent batch of green bricks with the second transport unit, revolving the green bricks from the end position to the starting position and discharging the green bricks with the first conveyor. No time is hereby lost in reversing the transport units, which keeps the cycle time of the transport systems short.

The method preferably comprises of changing the revolving direction for each batch of green bricks. A simplified construction can be obtained by rotating the transport units back and forth. No special measures need for instance be taken to provide power supply to the drive of the two conveyors and the drive means.

Further advantages, features and details of the present invention will be elucidated on the basis of the following description of a preferred embodiment thereof. Reference is made in the description to the figures, in which:
Figure 1 shows a partly cut-away side view of a preferred embodiment of the transfer device according to the invention;
Figure 2 shows a cross-section of the preferred embodiment of figure 1;
Figure 3 shows a top view of the preferred embodiment of the drive shown in figures 1 and 2;
Figures 4A-4C show various stages of a first revolving process; and
Figures 4D-4F show the various stages of a second revolving process.

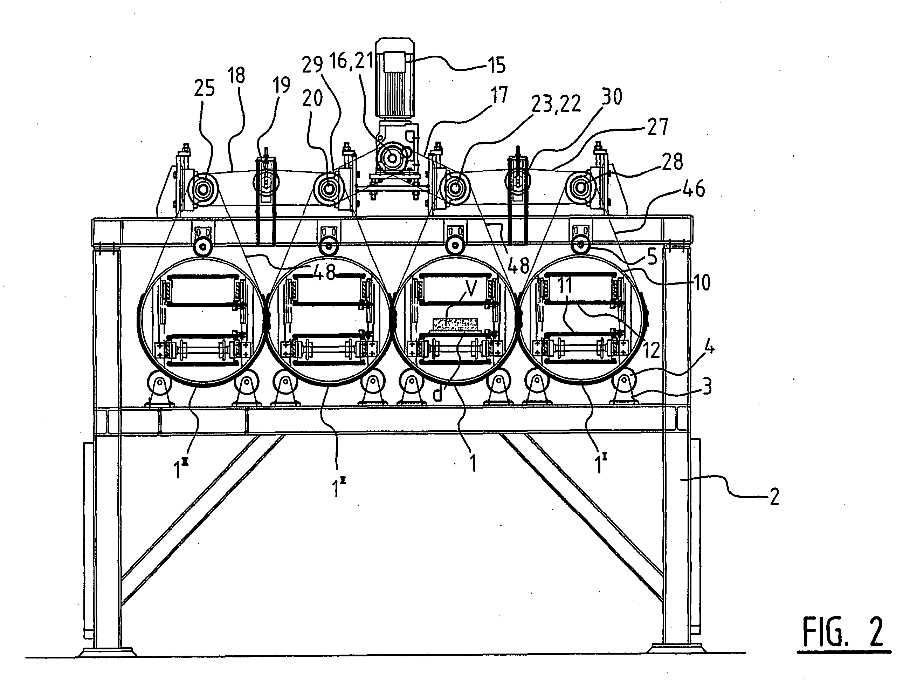

When green bricks V disposed on a drying plate leave the drying space the drying plates are transported one after another in the direction (P₁) of transfer device 1 according to the invention using a drying plate conveyor (not shown). The transfer device provides for transfer of the green bricks from the drying plate conveyor to a further conveyor. Revolving device 1 comprises a frame 2, on a number of cross beams of which are provided supports 3. Each of supports 3 comprises a wheel or roller 4. Rollers 4 function as supports for two circulating conveyors 6, 12, a front and a rear revolving ring 10, 10' (figure 2). The lower or first conveyor 6 comprises an endless conveyor belt 11 which can be driven in direction P₁₁ using drum motor 13. The upper or second conveyor 7 is likewise provided with an endless conveyor belt 12 which can be transported in direction P₁₂ using a drum motor 14.

The first and second conveyors 6, 12 are mounted on the two rings 10, 10' (referred to below simply as rings 10). Rings 10 are arranged on frame 2 for rotation about a longitudinal axis in that rings 10 support on the two rollers 4 positioned on the underside and the single roller 5 positioned on the top side.

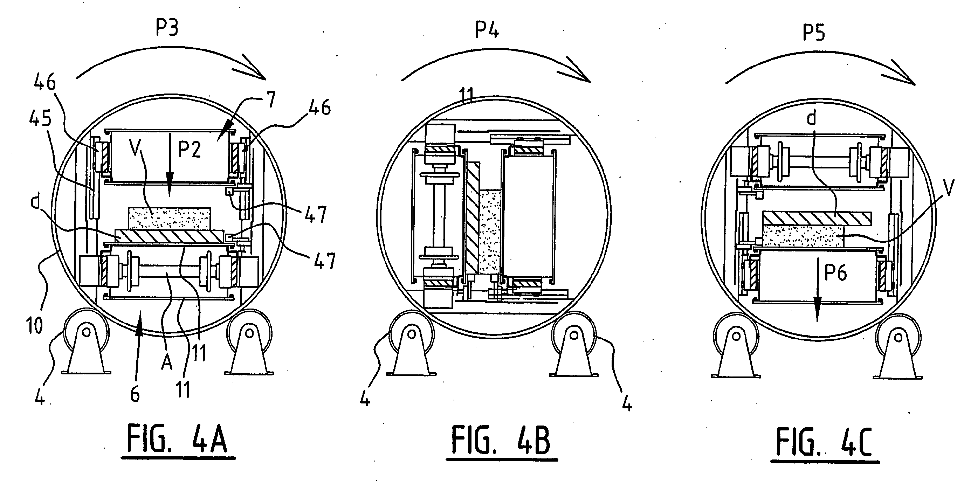

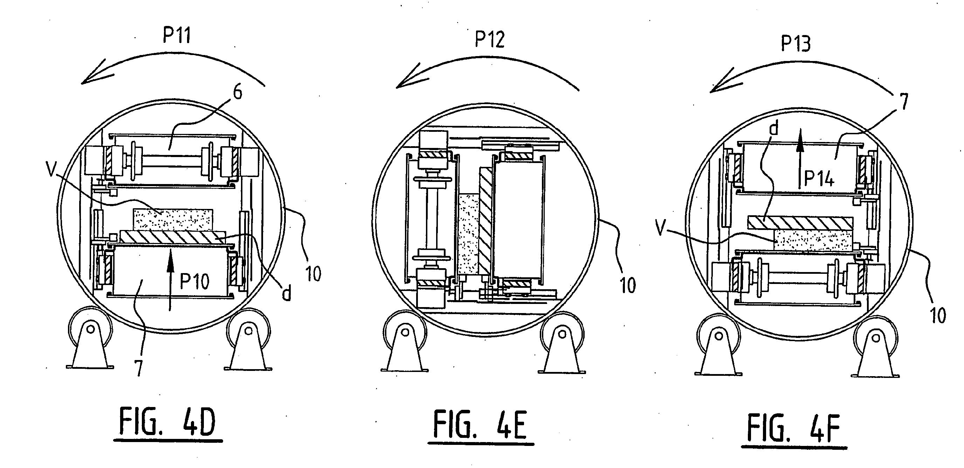

In the drawn embodiment the second conveyor 7 is moreover arranged slidably in the two rings 10. Second conveyor 7 comprises for this purpose on either side a number of protrusions 46 which can be guided in guides 45. Guides 45 are connected fixedly to rings 10, as shown in figures 4A-4F. Second conveyor 7 can be displaced up and downward by operating a pneumatic cylinder 31. The drive motor is provided in first conveyor 6 and has a drive with which a shaft 34 can be rotated. Arranged on shaft 34 is an articulated arm 32 which is mounted at its end on second conveyor 7 with a rotation shaft 33. The shaft 34 can be rotated by operating drive cylinder 31, which results in a rotation of articulated arm 32, as a result of which the second conveyor 7 is displaced (in the shown situation displaced downward (direction P₂)). Second conveyor 7 can be moved upward by rotating shaft 34 in opposite direction.

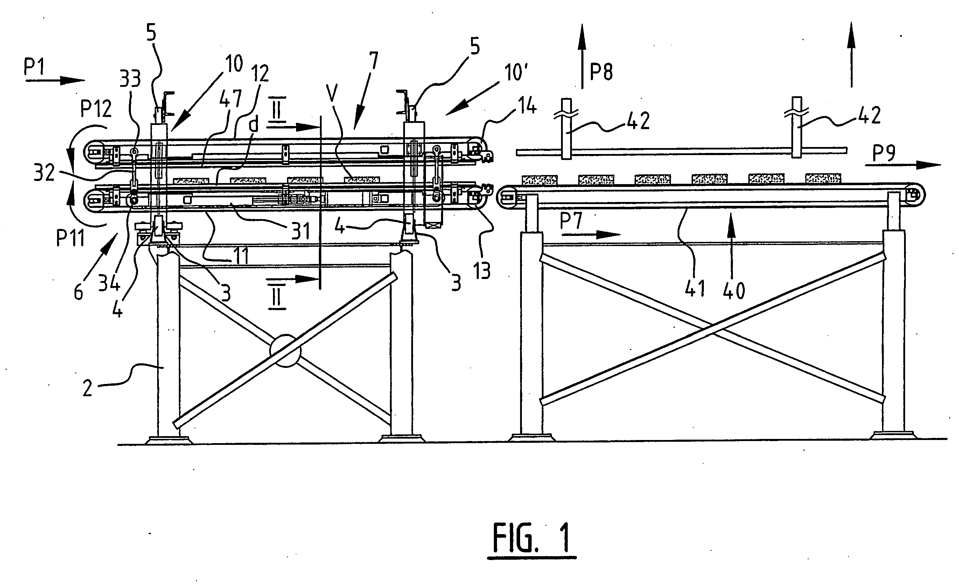

The cross-section of figure 2 clearly shows that a number of revolving devices (in the shown embodiments four) are provided adjacently of each other in frame 2. The rotation devices 1, 1^{I}, 1^{II}, 1^{III} provided adjacently of each other can be operated using a single, collective electric or hydraulic drive motor 15. This drive motor is disposed centrally on frame 2, for instance at the position of the foremost ring 10 or rearmost ring 10'. In the embodiment shown in figure 1 the motor is provided at the position of rear rings 10, but another location is equally possible.

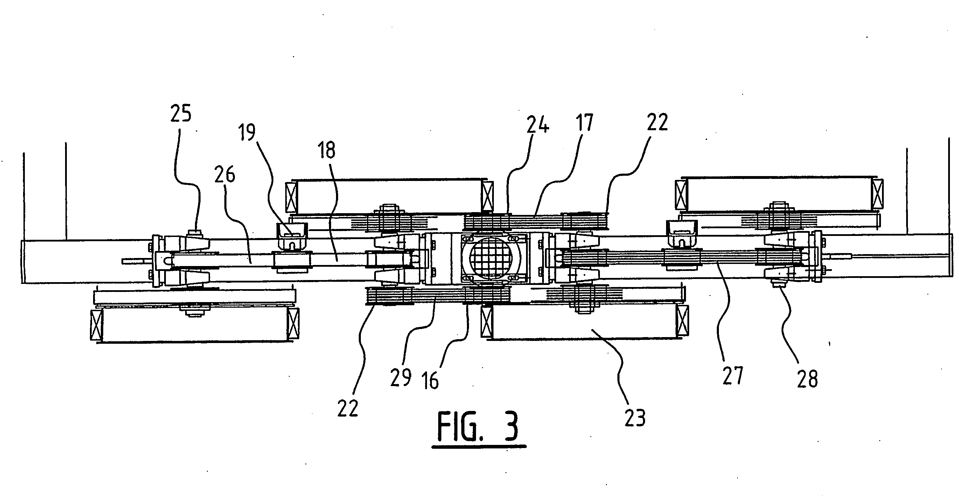

A ring 10 is driven using a drive belt 48 arranged around the outer periphery of the relevant ring 10. The respective drive belts 48 are driven by collective drive motor 15 via a number of intermediate belts. This is shown in more detail in figure 3.

The shaft of drive motor 15 drives two drive wheels 16 and 24 provided on either side of the motor. The front drive wheel 16 is connected to a drive wheel 20 by means of a belt 29. Drive wheel 20 is connected to a wheel 25 via a drive belt 18 and an intermediate wheel 29. Drive belt 48 of left-hand revolving device 1^{III} is also arranged around wheel 25. Rotation of front wheel 16 therefore results in a corresponding rotation of ring 10 of left-hand revolving device 1^{III}. The drive shaft of wheel 20 likewise drives a rear wheel 24 along which the drive belt 48 of revolving device 1^{II} is guided. The rotation of front wheel 16 therefore provides for corresponding rotation of ring of revolving device 1^{II}. The rear wheel 24 connected to drive motor 15 drives a rear wheel 22 using drive belt 17. The shaft of wheel 22 drives a front wheel 23 along which the drive belt 48 of revolving device 1 is guided. The rotation of rear wheel 24 therefore provides for a corresponding rotation of ring 10 of revolving device 1. Finally, a wheel 28 is driven via the shaft of wheel 22, an intermediate wheel 7 and a drive belt 27. Via a further wheel this provides for driving of drive belt 48 with which ring 10 of the right-hand revolving device 1^{I} is driven. In the shown embodiment each of the revolving rings 10 is therefore rotated in the same direction upon operation of motor 15.

The rings can however also be driven in other ways, for instance using one drive motor per ring or by means of a number of coupled gearboxes.

Figures 4A-4C further elucidate the operation of transfer device 1. Once a drying plate D provided with green bricks V has been placed as a whole on first conveyor 6, the conveyor is brought to a standstill. Second conveyor 7 is then displaced downward (direction P₂) in the above described manner using drive cylinder 31 until the lower part of endless drive belt 12 presses against the top side of the green bricks. The green bricks are hereby clamped fixedly between second conveyor 7 and (drying plate D and) first conveyor 6 so that the green bricks remain in place during the subsequent revolving process. Side guides 47 further prevent plate and/or green bricks falling out in the case clamping is insufficient.

When green bricks V have been fixed in the manner just described, drive motor 15 is operated so that rings 10 are rotated in clockwise direction (direction P₃). This provides for a corresponding rotation of the conveyors 6, 7 mounted fixedly thereon, as shown in figure 4B. The drive motor rotates rings 10 further (P₄ and P₅) to about 180°. An end position is then reached in which first conveyor 6 is placed directly above second conveyor 7. Once this position has been reached, the second conveyor is displaced downward (direction P₆) by operating the drive cylinder 31 so that green bricks V and the drying plate D placed on top of them come to lie freely. This situation is shown in figure 4C. When the end position is reached, drum motor 14 of second conveyor 7 is switched on so that the green bricks are transported in direction P₇ to the further conveyor 40 of the second transport system. In the shown embodiment the further conveyor is embodied, as the above stated conveyors, as an endless conveyor 41 driven by a motor (not shown).

Figure 1 shows that further conveyor 40 contains a previous batch of green bricks V. Because drying plate D is now situated on top of green bricks V, it has become easy to remove it without appreciable noise, without generating dust and/or damaging green bricks V. Drying plate D can for instance be removed by being lifted (P₈) and discharged laterally using a schematically shown pick-up mechanism 42. Drying plates D are preferably carried back into the path of the first transport system, i.e. the drying plate conveyor in the present example, and transported once again to moulding machine 1.

The green bricks themselves can then be discharged by the second transport system (direction P₉), for instance to a storage area or to a placing machine where the green bricks are stacked on a kiln truck.

As set forth, revolving device 1 is suitable for processing one batch of green bricks at a time. In a determined embodiment the rings 10, and therewith the conveyors 6, 7 mounted thereon, are always rotated in the same direction. In another, preferred embodiment the rings 10 and the conveyors 6, 7 mounted thereon are however rotated alternately in opposite directions. This is shown in figures 4D-4F. Once the first revolving process as shown in figures 4A-4C has been executed and a subsequent drying plate provided with a batch of green bricks is now arranged on second conveyor 7, the second conveyor will be displaced upward (P₁₀) by operating drive cylinder 31 until green bricks V and drying plate D are clamped between the two conveyors 6, 7. Another rotation then takes place, but this time in the opposite direction (P₁₁, P₁₂ and P₁₃), as shown in figures 4D-4F. In the second revolving process rings 10 and the conveyors mounted thereon are once again rotated through about 180°. After the second revolving process drive cylinder 31 displaces second conveyors 7 upward (direction P₁₄), whereby drying plate D and green bricks V once again come to lie freely and the process of discharging the green bricks with the drying plate and pick-up of the drying plate can be repeated.

Because in this embodiment the transfer device does not undergo a continuous movement, but is rotated back and forth each time, it is possible to suffice with the relatively simple construction. No special measures need for instance be taken for the power supply to drum motors 13, 14 and pneumatic cylinder 31 which would allow a free rotation of conveyors 6, 7 and the pressing means.

The present invention is not limited to the preferred embodiments thereof described here. The rights sought are rather defined by the following claims, within the scope of which many modifications are possible.

## Claims

1. Device for transferring green bricks, preferably of clay, in particular dried bricks, from a first transport system to a second transport system, the device (1) comprising:
- a first transport unit (6) for supplying a feed plate (d) coming from the first transport system and on which a number of green bricks (V) are disposed;
- a second transport unit (7) for discharging green bricks (V) to the second transport system;
- at least one revolving unit (10, 10') coupled to the first (6) and second transport unit (7) for revolving the first and second transport unit (7) with the feed plate with green bricks (V) arranged therebetween between a starting position, in which the second transport unit is situated above the first transport unit (6), and an end position in which the first transport unit (6) is situated above the second transport unit (7);
- pressing means for pressing the feed plate (d) with green bricks (V) fixedly between the first (6) and second transport unit (7) during the revolving;
- discharge means for discharging one or more feed plates (d) revolved onto the top of the green bricks (v).

2. Device as claimed in claim 1, wherein the pressing means are adapted to press the green bricks fixedly between the feed plate (d), which is arranged on the first transport unit, and the second transport unit.

3. Device as claimed in claim 1 or 2, wherein the pressing means are adapted to press the green bricks fixedly between the first transport unit (6) and a discharge plate mounted releasably on the second transport unit (7).

4. Device as claimed in any of the foregoing claims, comprising side guides (47) for lateral guiding of the green bricks (V) and/or feed plate (d) so that the green bricks (V) and/or feed plate (d) cannot slide out before, during or after the revolving.

5. Device as claimed in any of the foregoing claims, wherein a revolving unit comprises:
- a substantially annular revolving element (10, 10') on which the first and second transport units (6, 7) are mounted;
- at least two guide elements (4) provided on the frame, in particular guide rollers (4), on which the revolving element (10, 10') supports;
- rotating means for rotating the revolving element (10, 10') and the transport units (6, 7) mounted thereon between the starting position and end position.

6. Device as claimed in claim 5, wherein the rotating means are adapted to rotate the revolving element (10, 10') in a first direction from the starting position to the end position, and to rotate the revolving element (10, 10') in a second, opposite direction from the end position to the starting position.

7. Device as claimed in any of the claims 5-6, wherein the rotating means comprise one or more drive elements, in particular drive belts, conveyors or chains, which engage round a revolving element (10, 10') and with which the revolving element (10, 10') can be rotated.

8. Device as claimed in any of the foregoing claims, wherein the pressing means comprise:
- guide means along which the first transport unit (6) and/or the second transport unit (7) can be displaced upward and downward in order to increase or decrease the distance between the two transport units (6, 7);
- displacing means with which the intermediate distance can be decreased for the purpose of fixedly clamping the green bricks (V) and can be increased for the purpose of releasing the green bricks (V).

9. Device as claimed in any of the foregoing claims, further comprising a third transport unit (40) for further transport of discharged green bricks.

10. Device as claimed in any of the foregoing claims, wherein the transport unit (6, 7, 40) is driven intermittently.

11. Device as claimed in any of the foregoing claims, wherein the discharge means comprise pick-up means (42) for picking up a feed plate revolved onto the top of green bricks.

12. Device as claimed in any of the foregoing claims, comprising:
- a first transfer unit comprising a first and second transport unit and a revolving unit;
- a second transfer unit comprising a first and second transport unit and a revolving unit;
- a collective drive motor for collective driving of the revolving units of the different first and second transfer units.

13. System for transferring a number of green bricks (V), in particular dried bricks, disposed on a feed plate (d), the system comprising:
- a first transport system (6) for supplying feed plates (d) with green bricks (V);
- a device according to any of the foregoing claims, with which the feed plates (d) can be discharged,
- a second transport system (7) for discharging green bricks.

14. Method for transferring a number of green bricks (V), preferably of clay, in particular dried bricks, disposed on a feed plate (d) from a first transport system to a second transport system, the method comprising of:
- supplying on a first transport unit (6) a feed plate (d) which comes from the first transport system and on which a number of green bricks (V) is disposed,
- clamping the green bricks (V) fixedly on the feed plate (d) between the first transport unit (6) and a second transport unit (7);
- revolving the first (6) and second transport unit (7) with the feed plate (d) with green bricks (V) arranged therebetween between a starting position, in which the second transport unit (7) is situated above the first transport unit (6), and an end position in which the first transport unit (6) is situated above the second transport unit (7) ;
- removing the feed plate (d) resting on the green bricks (V) after revolving the transport units (6, 7);
- discharging the green bricks (V) to the second transport system using the second transport unit (7).

15. Method as claimed in claim 14, comprising of feeding a first batch of green bricks with the first transport unit, revolving the green bricks from the starting position to the end position and discharging the green bricks with the second conveyor, feeding a subsequent batch of green bricks with the second transport unit, revolving the green bricks from the end position to the starting position and discharging the green bricks with the first conveyor.

## Patentansprüche

1. Vorrichtung zum Übertragen von ungebrannten Ziegeln, vorzugsweise aus Ton, im Besonderen getrocknete Ziegel, von einem ersten Transportsystem auf ein zweites Transportsystem, wobei die Vorrichtung (1) aufweist:
- eine erste Transporteinheit (6) zum Bereitstellen einer Zuführungsplatte (d), die vom ersten Transportsystem kommt und auf der mehrere ungebrannte Ziegel (V) angeordnet sind;
- eine zweite Transporteinheit (7) zum Abladen der ungebrannten Ziegel (V) auf dem zweiten Transportsystem;
- wenigstens eine Dreheinheit (10, 10'), die mit der ersten (6) und der zweiten Transporteinheit (7) verbunden ist, zum Drehen der ersten und zweiten Transporteinheit (7) mit der dazwischen angeordneten Zuführungsplatte mit ungebrannten Ziegeln (V), zwischen einer Startposition, in der sich die zweite Transporteinheit über der ersten Transporteinheit (6) befindet, und einer Endposition, in der sich die erste Transporteinheit (6) über der zweiten Transporteinheit (7) befindet;
- Pressmittel zum Festpressen der Zuführungsplatte (d) mit ungebrannten Ziegeln (V) zwischen der ersten Transporteinheit (6) und der zweiten Transporteinheit (7) während des Umdrehens;
- Ablademittel zum Abladen einer oder mehrerer Zuführungsplatten (d), die auf die Oberseite der ungebrannten Ziegel (V) gedreht wurde bzw. gedreht wurden.

2. Vorrichtung gemäß Anspruch 1, wobei die Pressmittel ausgebildet sind, um die ungebrannten Ziegel zwischen der Zuführungsplatte (d), die auf der ersten Transporteinheit angeordnet ist, und der zweiten Transporteinheit festzupressen.

3. Vorrichtung gemäß Anspruch 1 oder 2, wobei die Pressmittel ausgebildet sind, um die ungebrannten Ziegel zwischen der ersten Transporteinheit (6) und einer Abladeplatte, die abnehmbar auf der zweiten Transporteinheit (7) befestigt ist, festzupressen.

4. Vorrichtung gemäß einem der vorhergehenden Ansprüche, die aufweist Seitenführungen (47) zur seitlichen Führung der ungebrannten Ziegel (V) und/oder der Zuführungsplatte (d), so dass die ungebrannten Ziegel (V) und/oder die Zuführungsplatte (d) vor, während und nach dem Drehen nicht weggleiten können.

5. Vorrichtung gemäß einem der vorhergehenden Ansprüche, wobei eine Dreheinheit aufweist:
- ein im Wesentlichen kreisförmiges, sich drehendes Element (10, 10'), auf dem die erste und zweite Transporteinheit (6, 7) befestigt sind;
- wenigstens zwei auf dem Rahmen vorgesehene Führungselemente (4), im Besonderen Führungsrollen (4), auf denen das Drehelement (10, 10') gehalten wird;
- Rotationsmittel zum Rotieren des Drehelements (10, 10') und der darauf befestigten Transporteinheiten (6, 7) zwischen der Start- und der Endposition.

6. Vorrichtung gemäß Anspruch 5, wobei die Rotiermittel ausgebildet sind, um das Drehelement (10, 10') in eine erste Richtung von der Startposition zur Endposition zu rotieren und um das Drehelement (10, 10') in eine zweite abgewandte Richtung von der Endposition in die Startposition zu rotieren.

7. Vorrichtung gemäß einem der Ansprüche 5 - 6, wobei die Rotiermittel ein oder mehrere Antriebselemente aufweisen, im Besonderen Antriebsriemen, Förderbänder oder - ketten, die um das Drehelement (10, 10') eingreifen und mit denen das Drehelement (10, 10') rotiert werden kann.

8. Vorrichtung gemäß einem der vorhergehenden Ansprüche, wobei die Pressmittel aufweisen:
- Führungsmittel, entlang derer die erste Transporteinheit (6) und/oder die zweite Transporteinheit (7) nach oben oder unten versetzt werden können, um den Abstand zwischen den beiden Transporteinheiten (6, 7) zu erhöhen oder zu verringern;
- Versetzungsmittel, mit denen der Zwischenabstand verringert werden kann, um die ungebrannten Ziegel (V) festzuklemmen, und erhöht werden kann, um die ungebrannten Ziegel (V) zu lösen.

9. Vorrichtung gemäß einem der vorhergehenden Ansprüche, die weiterhin aufweist eine dritte Transporteinheit (40) zum weiteren Transport der abgeladenen ungebrannten Ziegel.

10. Vorrichtung gemäß einem der vorhergehenden Ansprüche, wobei die Transporteinheit (6, 7, 40) mit Unterbrechungen betrieben wird.

11. Vorrichtung gemäß einem der vorhergehenden Ansprüche, wobei die Ablademittel Aufnahmemittel (42) aufweisen, um eine Zuführungsplatte aufzunehmen, die auf die Oberseite der ungebrannten Ziegel gedreht wurde.

12. Vorrichtung gemäß einem der vorhergehenden Ansprüche, die aufweist:
- eine erste Übertragungseinheit, die eine erste Transporteinheit und eine zweite Transporteinheit und eine Dreheinheit aufweist;
- eine zweite Übertragungseinheit, die eine erste Transporteinheit und eine zweite Transporteinheit und eine Dreheinheit aufweist;
- ein gemeinsamer Antriebsmotor zum gemeinsamen Anrieb der Dreheinheiten der unterschiedlichen ersten und zweiten Transporteinheit.

13. System zum Übertragen einer Anzahl von ungebrannten Ziegeln (V), im Besonderen getrocknete Ziegel, die auf einer Zuführungsplatte (d) angeordnet sind, wobei das System aufweist:
- ein erstes Transportsystem (6) zum Bereitstellen von Zuführungsplatten (d) mit ungebrannten Ziegeln (V);
- eine Vorrichtung gemäß einem der vorhergehenden Ansprüche, mit der die Zuführungsplatten (d) abgeladen werden können,
- ein zweites Transportsystem (7) zum Entladen ungebrannter Ziegel.

14. Verfahren zum Übertragen mehrerer ungebrannter Ziegel (V), vorzugsweise aus Ton, im Besonderen getrocknete Ziegel, die auf einer Zuführungsplatte (d) angeordnet sind, von einem ersten Transportsystem auf ein zweites Transportsystem, wobei das Verfahren aufweist:
- Bereitstellen einer Zuführungsplatte (d) auf einer ersten Transporteinheit (6), die vom ersten Transportsystem kommt und auf der mehrere ungebrannte Ziegel (V) angeordnet sind;
- Festklemmen der ungebrannten Ziegel (V) auf der Zuführungsplatte (d) zwischen der ersten Transporteinheit (6) und einer zweiten Transporteinheit (7);
- Drehen der ersten Transporteinheit (6) und der zweiten Transporteinheit (7) mit der Zuführungsplatte (d) mit den dazwischen angeordneten ungebrannten Ziegeln zwischen einer Startposition, in der sich die zweite Transporteinheit (7) über der ersten Transporteinheit (6) befindet, und einer Endposition, in der sich die erste Transporteinheit (6) über der zweiten Transporteinheit (7) befindet;
- Entfernen der Zuführungsplatte (d), die auf den ungebrannten Ziegeln (V) nach dem Drehen der Transporteinheiten (6, 7) aufliegt;
- Abladen der ungebrannten Ziegel (V) auf das zweite Transportsystem mit Hilfe der zweiten Transporteinheit (7).

15. Verfahren gemäß Anspruch 14, das aufweist das Zuführen eines ersten Stapels ungebrannter Ziegel mit der ersten Transporteinheit, das Drehen der ungebrannten Ziegel von der Startposition in die Endposition und das Abladen der grünen Ziegel mit dem zweiten Förderband, das Zuführen eines weiteren Stapels ungebrannter Ziegel mit der zweiten Transporteinheit, das Drehen der ungebrannten Ziegel von der Endposition in die Startposition und das Abladen der ungebrannten Ziegel mit dem ersten Förderband.

## Revendications

1. Dispositif de transfert de briques crues, de préférence en argile, et plus particulièrement de briques séchées, depuis un premier système de transport vers un second système de transport, lequel dispositif (1) comprend:
- une première unité de transport (6) pour alimenter un plateau d'alimentation (d) provenant du premier système de transport et sur lequel est disposé un certain nombre de briques crues (V);
- une seconde unité de transport (7) pour décharger les briques crues (V) vers le second système de transport;
- au moins une unité rotative (10, 10') couplée aux première (6) et seconde (7) unités de transport afin de faire tourner les première et seconde unités de transport (7), avec le plateau d'alimentation comportant les briques crues (V) entre elles, entre une position de départ dans laquelle la seconde unité de transport se situe au-dessus de la première unité de transport (6), et une position finale dans laquelle la première unité de transport (6) se situe au-dessus de la seconde unité de transport (7);
- des moyen de pression pour presser le plateau d'alimentation (d) comportant les briques crues (V) fixement entre les première (6) et seconde (7) unités de transport pendant la rotation;
- et des moyens de déchargement pour décharger un ou plusieurs plateaux d'alimentation (d) ayant tourné sur le dessus des briques crues (V).

2. Dispositif tel que revendiqué dans la revendication 1, dans lequel le moyens de pression sont conçus pour presser les briques crues de manière fixe entre le plateau d'alimentation (d), qui est disposé sur la première unité de transport, et la seconde unité de transport.

3. Dispositif tel que revendiqué dans la revendication 1 ou 2, dans lequel les moyens de pression sont conçus pour presser les briques crues de manière fixe entre la première unité de transport (6) et un plateau de déchargement monté de manière amovible sur la seconde unité de transport (7).

4. Dispositif tel que revendiqué dans l'une quelconque des revendications précédentes, comprenant des guides latéraux (47) pour le guidage latéral des briques crues (V) et/ou du plateau d'alimentation (d) de sorte que les briques crues (V) et/ou le plateau d'alimentation (d) ne puissent pas glisser pendant, durant ou après la rotation.

5. Dispositif tel que revendiqué dans l'une quelconque des revendications précédentes, dans lequel l'unité de rotation comprend:
- un élément rotatif essentiellement annulaire (10, 10') sur lequel sont montées les première et seconde unités de transport (6, 7);
- au moins deux éléments de guidage (4) disposés sur le cadre, en particulier des galets de guidage (4) sur lesquels repose l'élément rotatif (10, 10');
- des moyens de rotation pour faire tourner l'élément rotatif (10, 10') et les unités de transport (6, 7) montées dessus entre la position de départ et la position finale.

6. Dispositif tel que revendiqué dans la revendication 5, dans lequel les moyens de rotation sont conçus pour faire tourner l'élément rotatif (10, 10') dans une première direction depuis la positon de départ vers la position finale, et pour faire tourner l'élément rotatif (10, 10') dans une seconde direction opposée depuis la position finale vers la position de départ.

7. Dispositif tel que revendiqué dans l'une quelconque des revendications 5 à 6, dans lequel les moyens de rotation comprennent un ou plusieurs éléments d'entraînement, notamment des courroies, des convoyeurs ou des chaînes d'entraînement, qui entourent un élément rotatif (10, 10'), et grâce auxquels l'élément rotatif (10, 10') peut être entraîné en rotation.

8. Dispositif tel que revendiqué dans l'une quelconque des revendications précédentes, dans lequel les moyens de pression comprennent:
- des moyens de guidage le long desquels la première unité de transport (6) et/ou la seconde unité de transport (7) peuvent être déplacées vers le haut ou vers le bas afin d'augmenter ou de diminuer la distance entre les deux unités de transport (6, 7);
- des moyens de déplacement grâce auxquels la distance intermédiaire peut être diminuée afin de serrer de manière fixe les briques crues (V), et peut être augmentée afin de libérer les briques crues (V).

9. Dispositif tel que revendiqué dans l'une quelconque des revendications précédentes, comprenant en outre une troisième unité de transport (40) permettant encore de transporter et de décharger des briques crues.

10. Dispositif tel que revendiqué dans l'une quelconque des revendications précédentes, dans lequel l'unité de transport (6, 7, 40) est actionnée de manière intermittente.

11. Dispositif tel que revendiqué dans l'une quelconque des revendications précédentes, dans lequel les moyens de déchargement comprennent un moyen de saisie (42) permettant de saisir un plateau d'alimentation ayant tourné sur le dessus des briques crues.

12. Dispositif tel que revendiqué dans l'une quelconque des revendications précédentes, comprenant:
- une première unité de transfert comprenant des première et seconde unités de transport et une unité de rotation;
- une seconde unité de transfert comprenant des première et seconde unités de transport et une unité de rotation;
- un moteur d'entraînement collectif pour entraîner collectivement les unités de rotation des première et seconde unités de transfert différentes.

13. Système pour transférer un certain nombre de briques crues (V), notamment des briques séchées, disposées sur un plateau d'alimentation (d), lequel système comprend:
- un premier système de transport (16) pour alimenter des plateaux d'alimentation (d) en briques crues (V) ;
- un dispositif selon l'une quelconque des revendications précédentes, à l'aide duquel les plateaux d'alimentation (d) peuvent être déchargés;
- un second système de transport (7) pour décharger les briques crues.

14. Procédé pour transférer un certain nombre de briques crues (V), de préférence en argile, et plus particulièrement des briques séchées, disposées sur un plateau d'alimentation (d), depuis un premier système de transport vers un second système de transport, lequel procédé consiste à:
- placer sur une première unité de transport (6), un plateau d'alimentation (d) qui provient du premier système de transport et sur lequel est disposé un certain nombre de briques crues (V);
- serrer les briques crues (V) de manière fixe sur le plateau d'alimentation (d) entre la première unité de transport (6) et une seconde unité de transport (7);
- faire tourner les première (6) et seconde (7) unités de transport, avec le plateau d'alimentation comportant les briques crues (V) entre elles, entre une position de départ dans laquelle la seconde unité de transport (7) se situe au-dessus de la première unité de transport (6), et une position finale dans laquelle la première unité de transport (6) se situe au-dessus de la seconde unité de transport (7);
- retirer le plateau d'alimentation (d) reposant sur les briques crues (V) après avoir tourné les unités de transport (6, 7);
- décharger les briques crues (V) vers le second système de transport en utilisant la seconde unité de transport (7).

15. Procédé tel que revendiqué dans la revendication 14, consistant à fournir un premier lot de briques crues à l'aide de la première unité de transport, à faire tourner les briques crues de la position de départ jusqu'à la position finale, puis décharger les briques crues à l'aide du second convoyeur, fournir un lot suivant de briques crues à l'aide de la seconde unité de transport, faire tourner les briques crues de la position finale jusqu'à la position de départ, puis décharger les briques crues à l'aide du premier convoyeur.
